Europäisches Patentamt

European Patent Office

Office européen des brevets

(11) Publication number: **0 221 926 B1**

# EUROPEAN PATENT SPECIFICATION

(45) Date of publication of patent specification: **23.10.91**   (51) Int. Cl.⁵: **H04N 5/262**

(21) Application number: **86902694.8**

(22) Date of filing: **11.04.86**

(86) International application number:
**PCT/US86/00733**

(87) International publication number:
**WO 86/06233 (23.10.86 86/23)**

Divisional application 90125825.1 filed on
11/04/86.

(54) **A RECIRCULATING SPECIAL EFFECTS VIDEO FRAMESTORE.**

(30) Priority: **12.04.85 US 722532**

(43) Date of publication of application:
**20.05.87 Bulletin 87/21**

(45) Publication of the grant of the patent:
**23.10.91 Bulletin 91/43**

(84) Designated Contracting States:
**AT BE CH DE FR GB IT LI NL**

(56) References cited:
**EP-A- 160 549**     **US-A- 3 499 982**
**US-A- 3 728 479**     **US-A- 4 163 249**
**US-A- 4 168 510**     **US-A- 4 233 631**
**US-A- 4 249 212**     **US-A- 4 360 831**
**US-A- 4 400 719**     **US-A- 4 420 770**

(73) Proprietor: **AMPEX CORPORATION**
**401 Broadway M.S. 3-35**
**Redwood City California 94063-3199(US)**

(72) Inventor: **BLOOMFIELD, John, F.**
**60 Miramar Avenue**
**San Francisco, CA(US)**
Inventor: **TRYTKO, David, E.**
**1311 Ribbon Street**
**Foster City, CA 94404(US)**

(74) Representative: **Horton, Andrew Robert Grant**
**et al**
**BOWLES HORTON Felden House Dower**
**Mews High Street**
**Berkhamsted Hertfordshire HP4 2BL(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

This invention relates generally to the recirculation of video data through a video framestore to create a variety of special effects. This invention further relates to the combining of new video data with recirculating video data, on a frame or alternate field interpolation basis. This invention further relates to the use of a recirculating frame store in a video combiner system.

BACKGROUND OF THE INVENTION

In composing a television production, there is an ever increasing need for variety of special effects. The phrase "special effects" is used to define broadly the selective altering and/or manipulating of video data to create a visual effect to attract the attention of the viewer. Special effects are used in a variety of video production situations.

There are a number of devices that create these special effects. A video switcher is one device that can produce special effects. The special effects produced by a video switcher are most commonly used while switching between video sources. Common switcher special effects include dissolves and wipes. An example of a video switcher that can produce a variety of dissolves and wipes is the AVC video switcher of Ampex Corporation.

Another device for producing special effects is the digital special effects system, such as the ADO digital special effects system of Ampex Corporation. Digital special effects systems can perform a number of special effects such as video frame enlargement and reduction, frame movement, frame rotation in two and three dimensions, and perspective manipulation. Each of these effects can be combined with other special effects to form even more complex effects.

The output from a digital special effects system commonly includes not only an output video signal, but also a corresponding key signal. The key signal indicates the level of the video signal, that is the ratio of the gain of the video signal relative to its original gain in the corresponding video signal. Key signals can be created by a variety of video devices.

There are two types of key signals. The first is a bi-state key signal, which simply indicates whether the corresponding part of the video signal is to be retained. If the corresponding part of the video signal is to be retained, the key signal has a value of one, and if it is not to be retained, then the key signal has a value of zero.

A more generally useful type of key signal is a linear key signal. Instead of having just two possible values, a linear key can have any value from zero to one. Thus, the value of a linear key can be used to partially reduce the level of a video signal. When viewed on a video monitor, a corresponding video image would exhibit a level of transparency corresponding to the value of the key signal.

The use of a linear key is one method to allow two video signals to be added. If two video signals were simply added, their combined dynamic range would be twice the amount that could be handled by the video system. In order to add two video signals properly, their dynamic range must be reduced such that when they are added, their total dynamic range is equal to the maximum dynamic range or less. Processing the video signals with linear keys is one method to effect this dynamic range reduction.

A key signal is used to "process" a video signal. A video signal is processed by a key signal by multiplying the key signal with the video signal. Parts of a video signal which are processed with a corresponding part of a key signal which has a value of zero will result in a keyed video signal that has a signal level of zero. Conversely, when a video signal is processed with a key signal of unity, the keyed video signal will be left unchanged. When a video signal is processed with some intermediate value of a linear key, the signal level of the video signal is correspondingly reduced, effectively resulting in the video signal appearing transparent, if it is viewed on a video monitor.

Two or more keyed video signals can be properly combined only they have been processed by key signals totalling unity or less. For example, if a first keyed video signal has been processed by a key signal of 0.5 and a second keyed video signal has been processed by a key of 0.4, the two keyed video signals could be combined, because the total of the key signals is 0.9, which is less than unity. However, a video signal processed by a key of 0.5 cannot be combined with a video signal processed by a key of 0.6, because the total of the key signals would be 1.1, which is greater than unity. In practice, a decision is not usually made on whether to combine video signals based on their associated keys, but rather key signals are adjusted so as to allow the combining of video signals.

An unfortunate problem associated with the sale of special effects machines is that the more often a particular effect is used, its novelty disappears and thus its ability to attract attention diminishes. Thus there is a constant need for new effects. Additionally, the larger the library of potential effects available to the operator, the less often the operator will need to call upon a particular effect. There is a need, therefore, for a variety of special effects.

Framestores have been used in the video industry for many years. A framestore is a memory device that can store one complete frame of video data. Framestores are commonly digital. Digital framestores allow manipulation of stored video data. Digital framestores are commonly used in digital special effects systems.

Framestores are typically configured to input a frame of video from one part of a system and output the frame to another part of the system. When a new frame of video is inputted to the framestore, the previous frame is completely overwritten.

A frame of video is actually composed of two interlaced fields of video. A frame of video contains a certain number of horizontal lines of video information (for example, 525 lines in the NTSC system used in the United States). Each field is composed of every other line, the lines being interlaced to form a frame of video data. A frame of video is recorded by first recording one of the fields and successively recording the other field. A typical time period between the recording of successive fields is one-sixtieth of a second (in the NTSC system). If there is significant movement in the images of the video signal, there will be an annoying flicker when two fields are viewed as a video still frame. This can be a problem when such fields are combined in a framestore. One method to solve this problem is to use a process called alternate field interpolation. Alternate field interpolation uses only one field of video from each frame and interpolates the second field from the first field. Because the second field is based entirely on the first field, there is no movement between fields in a frame. The disadvantage of this method is that one half of the video information is being thrown away. When there is little or no movement between fields, the entire frame should be used. Therefore, there is a need to prevent flicker when there is movement between the two fields of a frame of video by using the entire original frame.

It would be advantageous if the output of a framestore could be recirculated back through the framestore with the addition of new input frames. This would allow the combining of many frames of video to form an output signal. A number of special effects can be created by this recirculation, including blurs, smears, and trails, all highly desirable special effects. Such recirculation requires the ability to combine video signals. This ability to combine video signals requires the ability to manipulate video signals and associated key signals. Such a framestore would require key signal processing, storage and recirculating capability.

Another desirable special effect would be the ability to decay or selectively remove recirculated frames. Recirculated frames can be decayed in a variety of ways, including decaying in a present order or in a random pattern. If decayed in some preset order, a method needs to be provided to determine the order of decay. If removed randomly, a method of generating the random decay needs to be provided.

While such a framestore could desirably be operated as part of many video systems, such as a switcher or digital special effects system, it could also be operated as a stand along unit. A particularly desirable use is in conjunction with a video combiner or concentrator. A video concentrator is a device which selectively combines various video signals and their associated key signals to form one or more output video signals. An example of such a video concentrator, is the ADO Concentrator of Ampex Corporation. Because of the variety of input signals available, the video concentrator is an ideal location for a special effects frame store.

SUMMARY OF THE INVENTION

The present invention fulfils a need for providing a variety of special effects by means of a recirculating frame store using a variety of decaying methods. Additionally, the present invention provides for a selective method of preventing flicker between successive fields of video. The present invention further provides for the operation of a recirculating framestore as part of a video concentrator.

US-A-4233631 describes an apparatus for combining an input video signal with a recirculated video signal obtained from a field store which can receive and delay for one field time either the said input signal or the combined signal. The proportions in which the input signal and the recirculated signal are combined are adjustable so as to provide a decaying effect. The system does not use key signals that denote the gain of associated video signals.

Accordingly, a method according to the invention of combining video signals comprises combining a input video signal with a recirculated video signal to provide an output video signal, the recirculated video signal being obtained by storing the output signal for a predetermined interval; and is characterised in that the input video signal, the output video signal and the recirculated video signal are each associated with a respective one of an input key signal, an output key signal and a recirculated key signal, the recirculated key signal is obtained by storing the output key signal for the said predetermined interval, the output key signal has a value determined in accordance with the values of the input key signal and the recirculated key signal, and the recirculated video signal is adjusted in accordance with changes in the recirculated key signal.

In one aspect the invention provides apparatus for selectively combining video signals to generate a video effect, comprising:

processing means responsive to an input video signal, an input key signal indicating the level for said input video signal, a recirculated video signal and a recirculated key signal indicating the level of said recirculated video signal, and arranged for generating an output key signal having a value determined by values represented by said input key signal and said recirculated key signal, generating a recirculated video processing key signal having a value determined by values represented by said input key signal and said recirculated key signal, adjusting the level of said recirculated video signal in accordance with the value of said recirculated video processing key signal, and combining said input video signal with said level adjusted recirculated video signal to generate an output video signal embodying said video effect; and

recirculation means coupled to said processing means for receiving said output video signal and said output key signal, and arranged for storing both said output video signal and said output key signal for a predetermined interval and, then for outputting the stored output video signal to said processing means as the recirculated video signal and for outputting said stored output key signal as the recirculated key signal.

The invention also provides apparatus for producing a video special effect by combining an input video signal with a recirculated video signal to produce an output video signal, each of said video signals having a gain identified by the value of respective key signals that signify differences between the gain of the respective video signal and a selected reference gain, said apparatus comprising:

a video input for receiving an input video signal;

a key input for receiving an input key signal where said input key signal has at least a portion which has a value less than one but greater than zero;

combining means having a first input coupled to receive said input video signal and having a second input for receiving said recirculated video signal, for combining said input video signal with said recirculated video signal to generate said output video signal at an output;

store means coupled to said output and having a recirculated video signal output, for storing said output video signal for a predetermined interval and then for outputting said stored output video signal at said recirculated video output as said recirculated video signal;

level adjustment means coupled between said recirculated video output and said second input, and having a key signal input for receiving a recirculated video processing key signal, for adjusting the level of said recirculated video signal in accorance with said recirculated video processing key signal and for coupling the level adjusted recirculated video signal to said second input;

a keystore means having an input and an output, for receiving a new recirculated key signal at said input, storing said new recirculated key signal for a predetermined interval and then for outputting said new recirculated key signal at said output as said recirculated key signal;

key processor means coupled to said key input and coupled to said input of said keystore means and having a recirculated key output coupled to said key signal input of said level adjustment means and having a recirculated key signal input coupled to said output of said keystore means, for receiving said recirculated key signal from said keystore means, and for calculating said recirculated video processing key signal from said input key signal and said recirculated key signal and for outputting said recirculating video processing key signal at said recirculated key output, and for calculating said new recirculated key signal from said input key signal and said recirculated key signal and for outputting said new recirculated key signal to said input of said keystore means for storage.

The invention also provides apparatus for processing a plurality of sequential frames of input video signals comprising:

video concentrator means having a plurality of video inputs and a plurality of corresponding key signal inputs, for receiving a plurality of video input signals defining a plurality of current frames of video, and for receiving a plurality of corresponding input key signals indicating the level adjustments to be made by said video concentrator means of the corresponding video input signal, and having a combined video signal input for receiving a combined video signal defining a current frame of a plurality of sequential frames of said combined video signal, and having a combined video key signal input for receiving a combined video key signal corresponding to said combined video signal indicating the level of said combined video signal, and having at first video output and a corresponding key signal output and having a second video output and a corresponding second key signal output, for combining a selected combination of said input video signals after adjusting the levels thereof in accordance with the corresponding input key signals with said combined video signal to generate an output video signal at said first video output and for outputting at said key signal output a concentrator output key signal indicative of the level of said output video signal, and for combining a selected combination of said input video signals after level adjustment thereof in accordance with the corresponding input key signals with said combined video signal to generate a second output video signal at said second video output and for combining the key signals corresponding to the video signals combined to generate said second output signal to generate a second output key signal so as to have a level indicative of the level of said second output video signal and for outputting said second output key signal at said second key signal output; and

a recirculating framestore means, including a keystore means, having a video input coupled to said second video output and having a key input coupled to said second key signal output of said video concentrator means and having a video output coupled to said combined video signal input, and having a key signal output coupled to said combined video key signal input, for receiving said second video output signal and said second output key signal and for combining said second video output signal with a level adjusted recirculated video signal comprised of stored video signals from previous frames of said second video output signal from said video concentrator means, and for outputting the resultant combined video signals to said video concentrator means combined video signal input as said combined video signal, and for storing said combined video signals for a predetermined interval and then outputting said stored combined video signals as said recirculated video signals for combination with a new frame of said second video output signals from said video concentrator means, said framestore means further comprising means for receiving said second output key signal corresponding to said current frame of said second video output signal and for calculating a new recirculated key signal from said second output key signal and a recirculated key signal from the previous frame, and for receiving said recirculated video signal and for adjusting the level of said recirculated video signal in accordance with the value of said new recirculated key signal to generate said level adjusted recirculated video signal, and for storing said new recirculated key signal for a predetermined interval and then outputting the stored new recirculated key signal as said recirculated key signal.

In a preferred form of the present invention, a video framestore is provided with a recirculation path that allows the output of the framestore to be combined with new input video the combined video being returned to the framestore for storage. The corresponding key signals for both the recirculated video and input video are processed along with the video and stored in a key framestore. This co-processing of key signals along with the video signals allows recirculation and combining of video signals. A number of control systems within the recirculating framestore system enable the creation of a variety of effects.

One control system used in connection with the present invention is a key signal gain processor. Such gain processors allow a uniform reduction in the gain of either the recirculated key signal or the input key signal. These key signals are used to further process the video signals that are being added to or recirculated in the framestore. The manipulation of these gain processors can define how recirculated video is combined with the new input video. Further, by setting the input gain to zero, no new video signal will be combined into the framestore, so that the video signals present in the framestore may be retained or decayed, but not be written over by new input video signals. Setting the recirculation gain to zero causes no video signal to be recirculated, and the framestore will thus be written over by input video.

Using just the gain processors, a still image or freeze frame can be created or input video signals can be passed through unaltered. Other effects can be created by adjustment of the gain processors.

An important aspect of a recirculating framestore is the manner in which recirculated video is decayed. Different methods of decaying video create different special effects. One method is not to decay the recirculating video signal at all. This creates the effect of the video images always writing over old images, when viewed on a video monitor. If there is movement in the video signal, a non-decaying trail is created.

Video frames can also be decayed by the above discussed gain processors. By setting the gain on the recirculated key to a value less than one, but greater than zero, recirculated images will fade on each recirculation until they disappear. The closer the gain is to zero, the faster the recirculated video will fade. Each image added to the framestore will decay at the same rate, but will be at different stages of decay, depending on when the image was added to the framestore. At any one time, the recirculated video might contain an image recently added as well as images added much earlier, and if the recirculated video was decayed by the gain processor, the images added to the framestore earlier will be more transparent than those added more recently, if viewed on a monitor.

Another control system to decay recirculating video uses the key signal which decays with time. The recirculating key signal is decayed by the gain processor in a selected manner. However, the key signal is not allowed to process the video signal, and the output key signal is maintained at a value of unity and does not reflect the diminishing value of the key signal. When the key signal associated with a particular image reaches a predetermined bottom threshold value, the key signal is set to zero. The zero key value is then used to process the video signal and is outputted as the key signal.

The effect of this timed decay is that as an image is moved and it leaves a trail of old images; each old image instantaneously disappears without a gradual decay in the order in which it was added to the frame store. If the images being added are smaller than the boundaries of the frame of video, the effect created appears something like the movement of a centipede, when viewed on a monitor. As new images are added to the front of the trail of images, the oldest images disappear one by one from the back of the trail, creating a special effect.

To create another effect, either of two preset gain values are applied to the gain processor instead of a uniform value being applied. This requires a recirculating gain control generator which upon receiving a random signal selects either of the two possible gain values. The effect thus created causes different parts of recirculated images to randomly decay at two different rates. The effect resembles the twinkling of stars at night.

The random signal generator used to create the random control signal uses a random sequencer rather than a random number generator. A good random number generator is difficult to produce. The random sequencer, which produces a random two state signal, is easier to implement and produces a more truly random output. This two state output is used in conjunction with a presettable counter. The preset on the counter is used to determine a threshold level. By adjusting the threshold level, the frequency of the gain control signal can be controlled.

The present invention further provides a solution to the inter-field flicker problem by modification of alternate field interpolation. In ordinary alternate field interpolation as shown in, for example, US-A-4233631, only one of each pair of fields is actually used. The present invention as described hereinafter actually splits the framestore and its video and key recirculation paths into two channels, one for each field of video. These two channels are completely recirculated during the period each field is received, instead of being recirculated once during the period a full frame is received.

Thus when the first field is being processed, an interpolated second field is being processed at the same time. Normally one field is processed at a time. This processing at the field rate maintains the resolution of a non-interpolated signal, while eliminating inter-field frame flicker.

An ideal location for such a recirculating framestore is as part of a video concentrator. By its nature, the recirculating framestore must have access to key as well as video signals. In a video concentrator, all the needed signals are available. Further, the effectiveness of the special effects is enhanced by a number of possible input images, including multiple-image images that can be created by the concentrator. The concentrator also allows the output of the recirculating frame store to be combined with other signals being outputted.

BRIEF DESCRIPTION OF THE DRAWINGS

Figure 1 is a schematic representation of components of a concentrator utilizing a recirculating special effects framestore in accordance with this invention.

Figure 2 is a schematic representation of a recirculating special effects framestore in accordance with the present invention.

Figure 3 is a schematic representation of a key processor in accordance with the present invention.

Figure 4 is a representation of an output frame of video of a recirculating special effects framestore view on a video monitor.

Figure 5 is a schematic representation of a random signal generator in accordance with this invention.

DETAILED DESCRIPTION

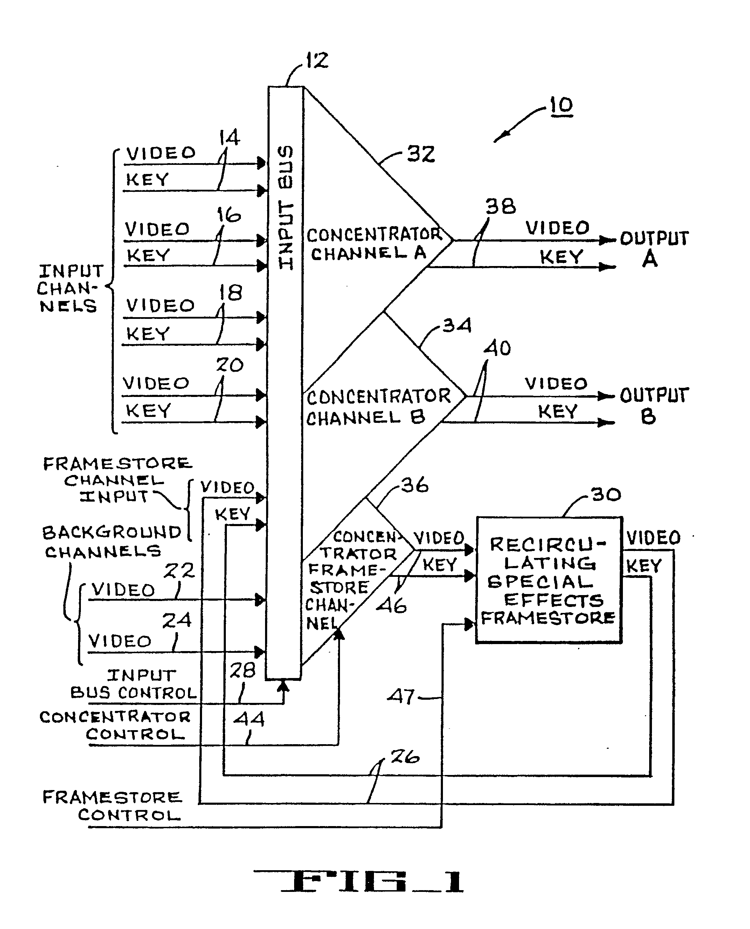

Figure 1 is an illustration of a typical video concentrator 10. An input bus 12 receives the various input signals and routes them to other parts of the concentrator according to an input bus control signal 28. Input channels 14, 16, 18 and 20 each input both a video signal and a respective key signal. The video signal is an unkeyed video signal, which is a video signal that has not been processed by its corresponding key signal. The key signal accompanies the video signal as an indicator of the processing to be performed within the concentrator. The source of these input channels may be a number of video devices, such as switchers or digital special effects system. While four input signal pairs are shown, it is understood that any number of input channels would be allowable.

There are preferably two background channels 22 and 24. These channels are "video signal only" inputs that usually provide a color background, although any video signal can be used. Background channels 22 and 24 are used to fill in the areas of the output frame that do not contain keyed video signals. In areas where the linear key is greater than zero but less than one, the background is added to make the total key signal value effectively equal to one. As with the input channels, any number of background channels are allowable.

The other input signal on input bus 12 is a framestore channel input 26. Framestore channel input 26 contains both a keyed video signal and an associated key signal, indicative of the key processing already performed on the video signal. Framestore channel input 26 is the output of a recirculating special effects framestore 30.

Input bus 12 routes the various signals to three concentrator channels 32, 34 and 36. The input bus control signal 28 determines which signals are passed to which channel. Control signal 28 is derived from operator inputs at a control panel.

The three concentrator channels 32, 34, 36 receive input signals from input bus 12 according to control signal 28. Concentrator channel 32 (shown as concentrator channel A) and concentrator channel 34 (shown as concentrator channel B) are preferably identical channels. Both channels A and B can accept any combination of signals from input channels 14, 16, 18 and 20, or framestore channel 26, and combine them according to concentrator control signals 44. Background channels 22 and 24 can be routed to only concentrator channels 32 and 34. Because the output of the framestore 30 must be outputted through one of the other concentrator channels, there is an opportunity to add a background signal at that stage.

The output of concentrator channels A and B are output signals 38 and 40. Output signals 38 and 40 both have a video signal and a key signal. Once again, the key signal is indicative of the previous key processing. The output of concentrator framestore channel 36 is a concentrator framestore channel output channel 46, which contains both a video and key signal inputted to the recirculating special effects framestore 30.

In operation, signals are selected from the input bus 12 and are fed to each of the concentrator channels 32, 34 and 36. As an example, concentrator channel 32 receives signals from two input channels, 14 and 16 and a background channel 22. The concentrator control signals 44 dictate that input channel 14 should have priority over input channel 16. The video signals of input channel 16 and 16 are processed and combined accordingly, and then keyed into background channel signal 22 to form a channel A output signal 38.

Continuing the above example, signals from input channels 18 and 20 are fed into concentrator framestore channel 36. Signals from input channels 18 and 20 are combined and outputted to the recirculating framestore 30. In framestore 30, new images are combined with old recirculated images according to a framestore control signal 47 and outputted to frame store channel input 26 as a video and key signals. Framestore channel input 26 is fed to the input bus 12, and in turn is fed by the input bus 12 to the concentrator channel B. Background channel 22 is also fed to the concentrator channel B, where it is added as background to the framestore channel input 26. The result is outputted as channel B output signals 40. These signals can then be fed to any video utilization device, such as a monitor, video tape recorder, or broadcast system.

In the above example, the routing of signals was arbitrarily chosen to illustrate a typical operation of the concentrator. The operator has complete control over a large number of potential routings of signals.

Next, the operation of the recirculating framestore 30 will be discussed. While the framestore 30 is preferably located within a video concentrator, it is clear that it could operate with numerous video systems and as a self contained system.

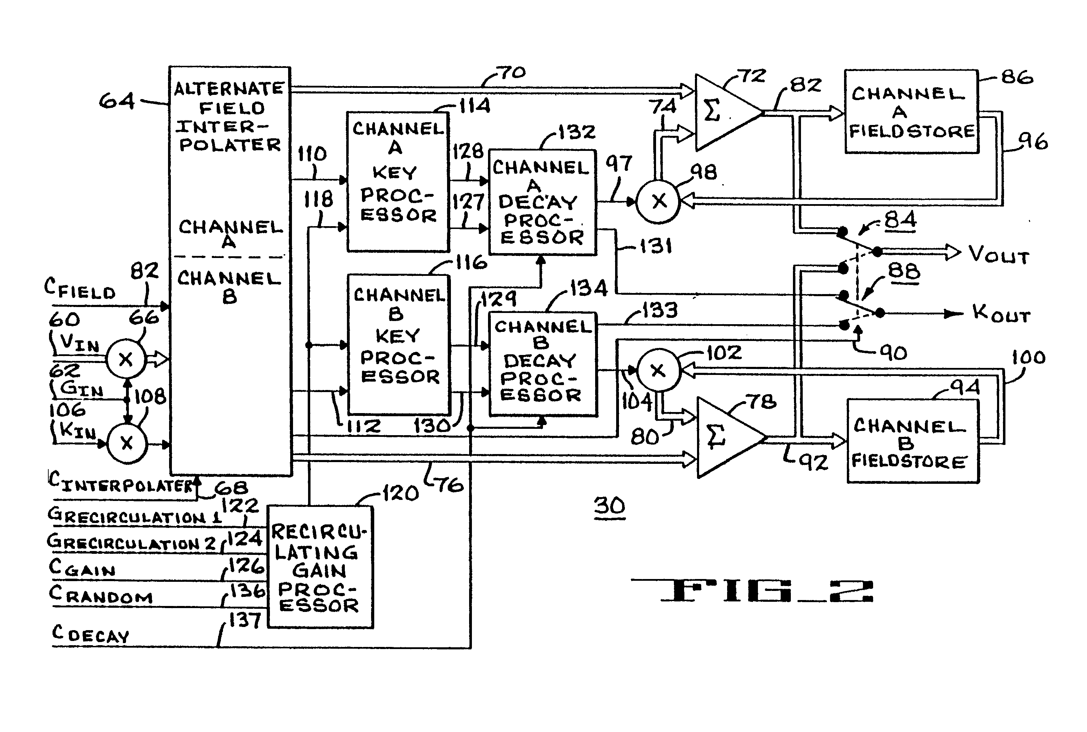

The recirculating framestore 30 is shown in Figure 2. There are three types of signals which are routed about the recirculating framestore 30. They are video signals, which are shown as double bus lines, key signals, and control signals. If this system is digital, which is the preferred embodiment, the video and key signals are binary signals.

Both video and key signals are recirculated. The video follows a relatively simple recirculation path and will be discussed first. Input video signal 60 can originate from a variety of video devices. If the framestore 30 is part of the concentrator 10 of Figure 1, then input video signal 60 will originate in concentrator framestore channel 36 as the output signal 46.

Input video signal 60 is fed to a video gain processor 66 where it is processed with an input gain signal 62. Input gain signals are numbers between zero and one, and input gain signal 62 specifies the amount of gain reduction to be imposed on input video signal 60. Input gain signal 62 preferably is generated by a control system from an operator's input. Video gain amplifier 66 can be implemented as a simple digital multiplier available as an integrated circuit package.

The output of video gain processor 66 is fed into an alternate field interpolator 64. Interpolator 64 operates in two modes. The first mode is used where there is little or no movement between fields of video. In this mode no interpolation takes place. The second mode is used when there is movement between the fields of video. The operating mode is determined by an interpolator control signal 68. This signal preferably is generated by the control system from operator input. When the operator notices a flicker in the output signal displayed on a video monitor, the operator sets this signal to the second mode.

If automatic generation of the interpolator control signal 68 is desired, input video signal 60 can be monitored by a motion detector in a well known manner. Such a motion detector will set the interpolation control signal 68 to the second mode whenever motion greater than a selected threshold amount is detected.

Interpolator 64 has two channels, A and B.

Channel A receives video field "one", and channel B receives video field "two". Channel A outputs an input channel A video signal 70 to a channel A video combiner 72, where it is combined with a recirculating channel A video signal 74. Channel B outputs an input channel B video signal 76 to a channel B video combiner 78, where it is combined with a recirculating channel A video signal 80.

If interpolator 64 is operating in a first mode, corresponding to a condition of no movement or flicker, then interpolator 64 acts as a routing device. According to a field control signal 82, the input video signal from video gain processor 66, is fed to either channel A or B for output as either input channel A video signal 70 or input channel B video signal 76. Field control signal 82 is generated by the control system and indicates whether the current field being received is the first or second field of the video frame.

If interpolator 64 is operating in the second mode, alternate field interpolation is occurring. When field control signal 82 indicates that the first field is being inputted, the input video signal is outputted directly on channel A as input channel A video signal 70. From the first field video signal, a second field video signal is interpolated and outputted by channel B as input channel B video signal 76. The process of alternate field interpolation is well known to those skilled in the art. When field control signal 82 indicates that the second field is being inputted, the input video signal is outputted directly on channel B as input channel B video signal 76. From the second field video signal, a second field video signal is interpolated and output by channel A as input channel A video signal 70.

Input channel A video signal 70 is combined with recirculating channel A video signal by channel A video combiner 72. In the preferred embodiment, video combiner 72 is implemented as a digital adder, which is available as an integrated circuit. Channel A video combiner 72 outputs an output channel A video signal 82. Output channel A video signal 82 is fed to both output video switch 84 and channel A fieldstore 86.

Output video switch 84 is operated in tandem with output key switch 88. Both switches are operated by output field select signal 90. Output field select signal 90 is generated by interpolator 64 based upon field control signal 82. The switch positions are alternated for every field of video to form a standard video signal. The output of video switch 84 is the output of framestore 30. If the framestore 30 is located in the concentrator 10 of Figure 1, the output video signal is part of the framestore input channel 26.

Input channel B video signal 76 is combined with recirculating channel B video signal by channel B video combiner 78. Video combiner 78 is the same as channel A video combiner 72. Channel B video combiner 78 outputs an output channel B video signal 92. Output channel B video signal 94 is fed to both output video switch 84 and a channel B fieldstore 92.

Output channel A video signal 82 is also fed into the channel A fieldstore. Video signals are constantly being read in and out of fieldstore 86. Each pixel of video data remains in the fieldstore for the time duration of one field of video. Fieldstore 86 outputs recirculating channel A video signal 96, which is fed to video gain processor 98. Video gain processor 98 is the same as the input video gain processor 66. Recirculating channel A video signal 96 is processed with a channel A key signal 97. The derivation of this key signal will be discussed below. The output of channel A gain processor is fed into channel A video combiner 72 and combined with video signal 70 to produce video signal 82 which is recirculated back through the fieldstore 86.

The channel B video recirculation path is identical to that of channel A. Output channel B video signal 92 is also fed into the channel B fieldstore. Fieldstore 94 outputs recirculating channel B video signal 100, which is fed to video gain processor 102. Video gain processor 102 is the same as video gain processors 66 and 98. Recirculating channel B video signal 100 is processed with a channel B key signal 104. The derivation of this key signal will be discussed below. The output of channel B gain processor is fed into channel B video combiner 78 and combined with video signal 76 to produce video signal 92 which is recirculated back through the fieldstore 94. This completes the input and recirculation paths for the video signals in recirculating framestore 30.

The path of the key signals will be discussed next. Input key signal 106 indicates the previous processing of input video signal 60. Because input video signal 60 is directly processed with input gain signal 62, input key signal 106 is also processed with that signal so that it will remain indicative of the processing of input video signal 60. Input key signal 106 is processed by input key processor 108. Input key processor can be implemented as a digital multiplier. The output of input key processor 108 is fed into interpolator 64.

Interpolator 64 does process the input key signal 106 in the same manner that the input video signal 60 is processed. Key signals that correspond to the first field are routed to channel A and outputted as input channel A key signal 110. Key signals that correspond to the second field are routed to channel B and outputted as input channel B key signal 112. Input channel A and B key video signals, 110 and 112, are fed to channel A and B key processors, 114 and 116 respectively.

Each of the channel A and B key processors, 114 and 116, actually is a combination of a key processor, key loop, and key store. Another input to key processor 114 and 116 is recirculation gain 118. The derivation of recirculation gain 118 will be discussed below. In the key processor 114 and 116, recirculation gain 118 is used to process an internal recirculating key signal.

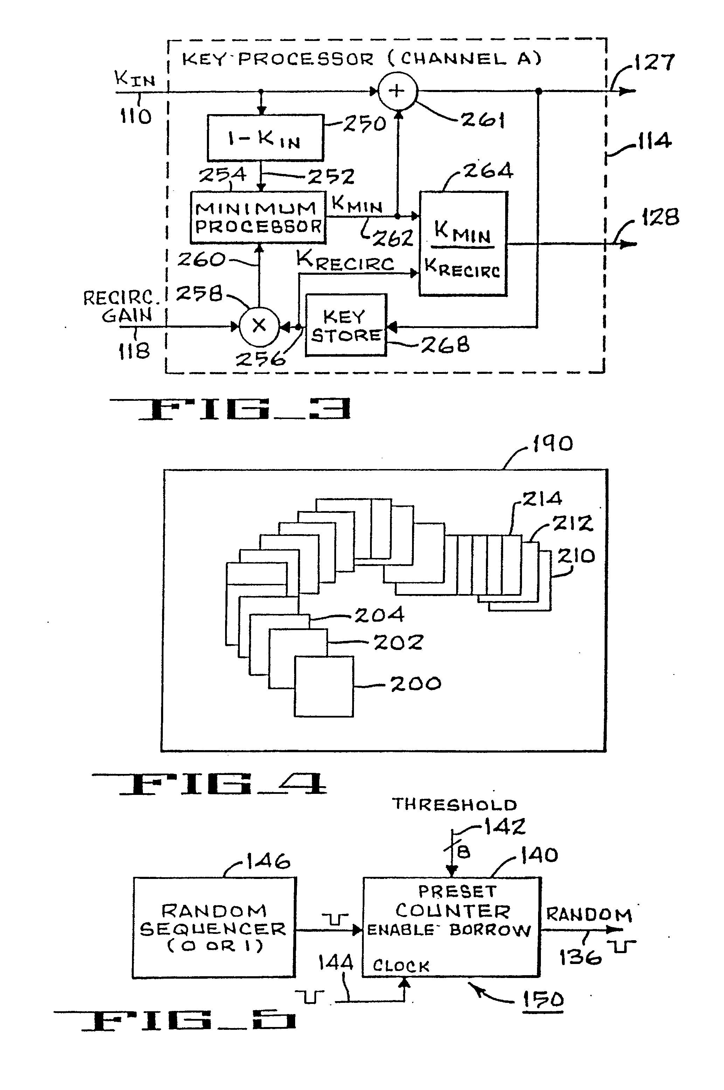

The channel A key processor 114 is shown in Figure 3. It will be understood that the channel B key processor 116 is identical. Inside the key processor 114, the input key signal 110 is subtracted from unity by the $1-K_{IN}$ processor 250 to form a remainder key signal 252. The remainder key signal 252 represents the amount of key signal not used by the input video signal 70 of Figure 2. The $1-K_{IN}$ processor 250 can be implemented, for example, as an inverter and digital adder. The output of the $1-K_{IN}$ processor 250 is fed to a minimum processor 254.

A recirculation key signal 256 represents the key signal used by the video currently in the channel A field store 86 of Figure 2. The recirculation key signal 256 is processed with the recirculation gain signal 118 by key signal processor 258. Key signal processor 258 is identical to key signal processor 108. The resulting signal is the processed recirculation key signal 260, which is fed to minimum processor 254 with remainder key signal 252.

Minimum processor 254 determines the minimum of the key signal input thereto and outputs the signal as minimum key signal $K_{MIN}$ on line 262. Minimum processor 254 can be implemented as a digital comparator. The output of minimum processor is fed to both key signal adder 266 and ratio processor 264.

Ratio processor 264 determines the ratio of the minimum key signal $K_{MIN}$ to the recirculation key signal $K_{RECIRC}$ 260, to form the recirculating channel A key signal 128. Ratio processor 264 can be implemented as an arithmetic processor integrated circuit, but is preferably implemented as a look-up table in a ROM memory.

The key processor 114 also outputs the sum of the minimum key signal 262 and the input key signal $K_{IN}$ 110, as the recirculating channel A output key signal 127.

The output key signal 127 is also fed to an internal key store 268, from which it is outputted as the recirculation key signal 256. Key store is simply a memory array of the same number of pixel locations as the channel A field store 86.

Referring again to Figure 2, key processor 114 is designed to allow input video 70 to use as much of the available signal gain as it needs. It is said to have priority over the recirculating video 96. All of the remaining gain is available to the recirculating video 96. If necessary, the recirculating video 96 is processed down to the level of the remaining key space. If the recirculating video 96 can use all the remaining gain, then the output key signal 127 is unity. However, if the recirculating video 96 has already been reduced, or will be reduced by the recirculation gain signal 118 to a level less than the remaining gain, then recirculating channel A key signal 128 will be at that level and the output key signal 127 will represent the total of the input key signal 110 and the minimum key signal 262 (Figure 3), which will be less than unity. Video signals that have been reduced in gain have lost information because these signals exist in only limited resolution. Thus when they are reduced, they lose resolution and if increased in gain, they will not reproduce their original values. Thus video signals preferably are only reduced in gain, and not generally increased.

The recirculating channel A and B key signals 128 and 130 are fed to channel A and B decay processors, 132 and 134, whose function will be explained below. If not activated, decay processors 132 and 134 pass their input signal unaffected. Thus recirculating channel A and B key signals are outputted as channel A and B key signals 97 and 104.

The channel A and B output key signals are also fed to channel A and B decay processors 132 and 134 and, if decay processors 132 and 134 are not activated, pass unaffected as channel A and B key output signals, 131 and 133. The channel A and B key output signals 131 and 133, are fed to key switch 88. Key switch 88 is operated in tandem with video switch 84. The output of key switch 88 is located in the concentrator 10 of Figure 1, the output key signal is part of the framestore input channel 26.

The recirculation gain signal 118, used by both key processors, is generated by recirculating gain processor 120. Recirculating gain processor 120 operates in two modes. These modes are selected by gain control signal 126, which is generated by the control system, preferably from operator input. In the first mode, recirculating gain processor 120 outputs recirculating gain 1, 122, and outputs it as recirculation gain signal 118. This is considered the normal operating mode.

In the second mode, recirculating gain processor 120 receives a random control signal 136. This two state signal is generated by a random signal geneator 150 of Figure 5, to be discussed below. The random control signal 136 selects either recirculation gain 1, 122, or recirculation gain 2, 124, as recirculation gain signal 118.

Decay processors 132 and 134, when activated, output key signals having a value of one regardless of their input signals, unless their input key signals are under a low threshold level, when they output signals of zero. The purpose of this processing will be discussed below.

This completes the discussion of the interconnection of the elements of Figure 2. Next, the operation of Figure 2 will be explained.

The operation of recirculating framestore 30 is best understood within a typical example. The goal of this example is to create a special effect called a trail. A trail is illustrated in Figure 4. Figure 4 is a representation of a video signal viewed on a video monitor. A size reduced frame 200 is moved from a starting location 210 to a final location 200. As it moves along the path, it leaves old reduced frames such as 210, 212, 214, 204 and 202.

In this example, the input video 60 (Figure 2) comprises a size reduced frame of video in an otherwise empty full frame 190. Such a video signal can be created by a digital special effects system which is capable of reducing a video signal and positioning it within a full frame of video. If reduced frame 210 were not partially obscured by reduced frame 212, and reduced frame 210 were the only reduced frame in full frame 190, then Figure 4 would be a representation of input video signal 60. It should be assumed that frame 210 contains a video picture, such as a field of flowers or a news anchorman reading the news. Over a period of time, the frame of active video is moved in relation to the full frame of video. Frame 210 follows the path shown by the other boxes in the full frame on the video monitor. Unlike Figure 4, which actually represents the desired trail effect to be created by the recirculating framestore 30, input video 60 does not leave a trail, but rather only one frame is visible at any one time. The moving frame starts at the location of frame 210, and follows the path shown and stops at the location of frame 200.

Input key signal 106 (Figure 2) is created with input video signal 60 and has a value of one where it corresponds to the reduced frame 200 and a value of zero elsewhere. In this example, both the input gain signal 62 and recirculating gain signal 118 are set at unity. However, the effects of changing these signals will be discussed below. For this example, it is also assumed that fieldstores 86 and 94 start empty.

Framestores are commonly said to recirculate at frame rate. This means that the contents of the framestore, one frame (two fields) of video, recirculates once in the time it takes a new frame to be inputted. Because framestore 30 is actually composed of two field stores and recirculation paths, framestore 30 can be recirculated at field rate. This means that the contents of the framestore 30 are completely recirculated in the time it takes to input a new field. It is this doubled rate that allows every-field interpolation by the interpolator 64. Operation of interpolator 64 on the luminance and chrominance components of the input video signal 60 is described in two sections of an Ampex Manual by David Trytko, one of the present inventors, entitled "ADO Infinity - Target Framestore System - System Theory and Operation".

The input video signal 60 and input key signal 106 pass unaffected by processors 66 and 108, because the input gain signal 62, in this example, is set to one. If interpolator 64 is off, the first field of video and key are sent to channel A. Nothing is sent to channel B. Anything recirculating in channel B is allowed to recirculate without additional material. The second field of video and key are sent to channel B and nothing is sent to channel A.

If interpolator 64 is on, then as field "one" of video and an associated key signal are routed to channel A and an interpolated second field of video and an associated key signal are sent out on channel B. When the real second field is encountered, it is sent out on channel B and an interpolated first field of video and its key signal are sent out on channel A. This alternating interpolation allows the fieldstores to be updated with new material every field, instead of every frame, producing improved picture quality in the resulting video image.

The common method of alternate field interpolation in prior art devices would be to receive the first field and video and pass them on channel A and send nothing on channel B. Upon receiving the second field, the second field is discarded and a new second field of video and key is interpolated from the first field and sent out on channel B. Nothing is sent out on channel A. When the interpolator is off, the field stores are only updated with new material every frame. This preserves the full resolution of the original frame of video. Under the common method of interpolation, one of the fields in a frame is discarded in favor of an interpolated field so as to eliminate inter-field flicker. Interpolator 64 uses both fields in the frame to interpolate, and reduce or eliminate flicker. By using both fields and updated on field basis, there is no loss of resolution as compared to the more common method of alternated field interpolation.

The channel A input video signal 70, after leaving interpolator 64, is combined with the channel A recirculating video 74. Before being combined with the cahnnel A input video, recirculating video 74 must be processed with the output of the key processor 114. For this first frame of video, the fieldstore 86 was defined as being empty. Thus the output of the framestore 30 is the input video signal. The input video signal 70 is stored in fieldstore 86 and the input key signal 110 is stored in key store 268 (Figure 3). The second field of video and key is processed in the same manner.

For the sake of this example, it will be assumed that the second frame of input video contains the size reduced frame of video now moved from position 210 in Figure 4 to position 212. The input video signal 70 is passed normally to video combiner 72. The input key signal 110 is also passed to key processor 114.

Referring to Figure 3, the input key signal 110 defines the area of reduced frame 212 in Figure 4. The key signal 110 is subtracted from unity to form the remainder key signal 252, which indicates what key signal space is available to the recirculating video. Key store 268 contains the key signal from the first frame, which defines the area of reduced frame 210 in Figure 4. Because the recirculation gain 118 is defined as unity for this example, the minimum processor 254 determines the minimum between the recirculating key signal and one minus the input key signal. There are three areas of interest in this determination.

First is the area outside both reduced frames 210 and 212 of Figure 4. In that area of the key signal the minimum value $K_{MIN}$ is zero because the recirculating key signal 260 is zero and the key signal on line 252 (1-$K_{IN}$) is unity.

The next area of interest the key signal is the area of the second reduced frame 212 (Figure 4). Note that this frame partially obscures the first frame 210. This frame is part of the input key signal, and it has priority over any image being recirculated. It should be noted that key processor 114 could easily be designed such that recirculated key signal would have priority over input key signals. In the area defined by the input key signal for the second frame, the minimum processor 254 outputs zero on the line 252. The third area is the area of the first reduced frame that is not obscured by the reduced frame 212 (Figure 4) in the second input frame. This can be seen as the backward "L" shaped area labelled 210 in Figure 4. Both input signals to minimum processor 254 have this area of the key signal at one. Thus the minimum key signal 262 only defines this backward "L" shaped area.

The minimum key signal 262 is added to the input key signal to form the output key signal 131 and the recirculation key signal to be stored in the key store 268. This key signal indicates area of interest in the output key signal is the combined area of the first and second input key signals defining the two overlapping reduced frames of video, 210 and 212.

The ratio of the minimum key 262 and the recirculating key 260 is the minimum key 262, which becomes the channel A key signal 97. The ratio is used to determine how to process the recirculating video signal to a desired level while taking into account the previous processing of that video signal. The channel A key signal 97 is used to process the recirculating video 96. Recirculating video 96 contains the reduced frame 210 (Figure 4) from the first output frame. After being processed by the channel A key signal 97, the recirculating video signal is no longer the full reduced frame 210 (Figure 4) but rather an "L" shaped area of video. When added to the input video signal 70, an output video signal 82 is formed which is a video signal in the shape of two overlapping reduced frames, 210 and 212. This video signal is also sent to the fieldstore 86, to be used as the recirculated video signal for the next input frame.

The above discussion has been restricted to channel A for the sake of clarity. It is clear that it applies equally to channel B and the second fields.

Referring to Figure 4, frame 210 is referred to as a trail. As frames are added, the same process occurs until the end of the motion with frame 200 as the final frame. Each new frame would obscure a portion of the previous frame, yielding a full frame 190 as shown in Figure 4. The trail is a basic special effect of the recirculating framestore 30. Other special effects may be described as variations on the trail effect. The following will discuss the effects of changing the control signals.

Changing the input gain signal 62 to a value less than one causes the new frames to have a transparent appearance. If the frame is not moved, then a number of input frames must be to added on top of each other to form a frame of full intensity. Because even an apparently still picture contains a slight amount of movement of the originating camera, the image becomes blurred wherever movement occurs producing a desirable special effect. If the frame is moving, then the image smears, which is also considered a desirable effect. If the input gain signal 62 were set to zero, no new video would be added to the recirculation path. If the recirculation gain 118 was set to one at the same time a freeze effect would be created.

Changing the recirculation gain causes a decaying of old images. Each old image would become more transparent until it finally disappeared. The more times a particular image is recirculated the more its key signal is reduced. If the added images are moved while being added, a very pleasing trail that resembles the tail of a comet, is created.

There are two other systems within the recirculating framestore 30 to create special effects. The first is the decay processors and the second is the recirculating gain processor.

The special effect created by the decay processors 132 and 134 uses the recirculating key signal, 250 (Figure 4), in key processors, 114 and 116, as a collection of down counters. The recirculating key signal is decayed normally by the recirculating gain signal 118, but the recirculating key signals are not allowed to produce corresponding decay of the recirculating video signals, 96 and 100, or output key signals, 127 and 129. The recirculating video signals 96 and 100 are processed with a gain of one and the output key signal is outputted at one. This effect, referring to Figure 4, allows the old frame images to remain at full intensity each old frame image instantaneously disappears in the order they were added as their key values go below a lower threshold value. The effect looks something like the movement of a centipede.

To accomplish this effect, decay processors 132 and 134, when activated, output a key signal of one, regardless of their input, unless their input is below the low threshold, when they output zero. The low threshold value is necessary because the key signal will never actually reach zero as it is always multiplied by an amount which only reduces its value.

The other effect system is the recirculating gain processor 120. Recirculating gain processor 120 is activated by gain control signal 126. Unless activated, recirculating gain processor 120 passes recirculating gain signal unchanged. When activated, it passes either recirculating gain "one", 122, or "two", 124, depending on the state of random control signal 136. Both recirculating gains "one" and "two" are generated by the control system from an operator's input. For a maximum effect, these two values should be relatively different in value, although they could be set to any values. The effect created by this two-rate decay is a twinkling of the trail, similar to the twinkling of stars at night.

While a random control signal can be created in a variety of ways, the preferred method is shown in Figure 5. The control random signal 136 is the carry signal of up counter 140. The frequency of the control random signal 136 is determined by the preset input 142 of counter 140. The larger the preset, the more frequently the random control signal 136 will be issued. The pulses used to increment the counter are supplied to the clock input 144 of the counter. The frequency of the clock pulses should be at the rate of digital sampling of the system, that is the rate the pixels move through the system. The random factor is created by random sequencer 146, which randomly outputs either zero or unity into the enable counter 140. The effect of this arrangement is that the counter 140 counts down from the preset 142 only when enabled by the random sequencer 146. Counter 140 can be implemented as a simple digital up counter. Random sequencer can be implemented as a white noise generator with a threshold output.

In summary, the recirculating framestore can be adjusted by a variety of control signals and system to create a variety of special effects. When there is movement between consecutive fields of video, the framestore can operate in an interpolation mode the interpolator interpolates every field as opposed to every frame, to reduce or eliminate flicker. The recirculating framestore can operate in many video devices and even as a stand alone device, but is preferably situated in a video concentrator, which acts as a ideal input and output system for the framestore.

## Claims

1. Apparatus for selectively combining video signals to generate a video effect, comprising:

processing means (30, 72, 98, 114) responsive to an input video signal, an input key signal indicating the level for said input video signal, a recirculated video signal and a recirculated key signal indicating the level of said recirculated video signal, and arranged for generating an output key signal having a value determined by values represented by said input key signal and said recirculated key signal, generating a recirculated video processing key signal having a value determined by values represented by said input key signal and said recirculated key signal, adjusting the level of said recirculated video signal in accordance with the value of said recirculated video processing key signal, and combining said input video signal with said level adjusted recirculated video signal to generate an output video signal embodying said video effect; and

recirculation means (86, 268) coupled to said processing means for receiving said output video signal and said output key signal, and arranged for storing both said output video signal and said output key signal for a predetermined interval and for outputting said stored output video signal to said processing means as the recirculated video signal and for outputting said stored output key signal as the recirculated key signal.

2. Apparatus according to claim 1 wherein said processing means generates said output key signal to have a value representative of the level of said output video signal.

3. Apparatus according to claim 2 further comprising signal gain adjustment means (120, 258) coupled to said processing means and responsive to a gain control signal for altering the recirculated video processing key signal according to the value of said gain control signal.

4. Apparatus according to claim 3 further comprising means (140, 146) for selectively randomly altering the value of said gain control signal.

5. Apparatus according to any foregoing claim further comprising means (132), coupled to said processing means to receive said recirculated video processing key signal, for reducing the value of said recirculated video signal to zero when the value of said recirculated video processing key signal is less than a selected threshold.

6. Apparatus according to any foregoing claim further comprising signal combining means (10) having a plurality of video and key signal input pairs (14, 16) and a plurality of video and signal output pairs (38, 40), one of said video and key signal input pairs being coupled to receive said output video signal and said output key signal, respectively, from said processor means (30), and one of said video and key output pairs being coupled to supply said input video signal and said input key signal, respectively, to said processor means, said signal combining means having an input (28) for receiving a combination control signal determining the coupling of input video signals to video outputs, said signal combining means being arranged for combining the video signal from selected ones of said video inputs determined by said combination control signal in accordance with the corresponding key signals received at the corresponding key signal inputs of said input pairs, and for outputting the combined video signal at a selected output, where each said output may have as an output video signal a different combination of selected input video signals, and for outputting at each said key signal output a key signal having a value indicative of the level of the combined video output signal at the corresponding video output.

7. Apparatus for producing a video special effect by combining an input video signal with a recirculated video signal to produce an output video signal, each of said video signals having a gain identified by the value of respective key signals that signify differences between the gain of the respective video signal and a selected reference gain, said apparatus comprising:

a video input (70) for receiving an input video signal;

a key input (110) for receiving an input key signal where said input key signal has at least a portion which has a value less than one but greater than zero;

combining means (72) having a first input (70) coupled to receive said input video signal and having a second input (74) for receiving said recirculated video signal, for combining said input video signal with said recirculated video signal to generate said output video signal at an output (82);

store means (86) coupled to said output (82) and having a recirculated video signal output (96), for storing said output video signal for a predetermined interval and then for outputting said stored output video signal at said recirculated video output as said recirculated video signal;

level adjustment means (98) coupled between said recirculated video output (96) and said second input (74), and having a key signal input (97) for receiving a recirculated video processing key signal, for adjusting the level of said recirculated video signal in accordance with said recirculated video processing key signal and for coupling the level adjusted recirculated video signal to said second input;

a keystore means (268) having an input and an output, for receiving a new recirculated key signal at said input, storing said new recirculated key signal for a predetermined interval and then for outputting said new recirculated key signal at said output as said recirculated key signal;

key processor means (250, 254, 261) coupled to said key input and coupled to said input of said keystore means and having a recirculated key output coupled to said key signal input of said level adjustment means and having a recirculated key signal input (260) coupled to said output of said keystore means, for receiving said recirculated key signal from said keystore means, and for calculating said recirculated video processing key signal from said input key signal and said recirculated key signal and for outputting said recirculating video processing key signal at said recirculated key output, and for calculating said new recirculated key signal from said input key signal and said recirculated key signal and for outputting said new recirculated key signal to said input of said keystore means for storage.

8. Apparatus according to claim 7 further comprising means (258) coupled between said output of said keystore means and said recirculated key signal input of said key processor means and having an input for receiving a recirculated video gain control signal, for adjusting the level of said recirculated key signal received from said keystore means in accordance with said recirculated video gain control signal, and for coupling both the level adjusted recirculated key signal and the non level adjusted recirculated key signal to said key processor means for use in calculating said new recirculated key signal and said recirculated video processing key signal.

9. Apparatus according to claim 8 further comprising means (140, 146) means for randomly changing said recirculation video gain control signal.

10. Apparatus according to any of claims 7 to 9 further comprising means (132) for blocking the alteration of the level of said recirculated video signal regardless of changes in said recirculated video key processing signal until said recirculated video processing key signal falls below a theshold, and, when said recirculated video processing key signal falls below said threshold, for reducing the level of said recirculated video signal to a predetermined level.

11. Apparatus according to any of claims 7 to 10 further comprising means for altering the level of said recirculated video signal in accordance with a selected one of a plurality of recirculated video processing key signals, calculated from a plurality of said recirculation video gain control signals, randomly selected.

12. Apparatus according to any of claims 7 to 11 further comprising means coupled to said video input and coupled to said key input and having an input for receiving an input gain control signal for simultaneously adjusting the levels of said input video signal and said input key signal in accordance with the level of said input gain control signal.

13. Apparatus according to claim 8 further comprising means (140,146) coupled to said level adjustment means and to said key processor means for randomly altering the level of said recirculated video signal by simultaneously randomly altering the value of said recirculated video processing key signal.

14. Apparatus according to claim 9 in which said means for randomly changing said recirculation video gain control signal comprise: a random sequencer (146) means for producing a two state signal which continuously assumes one of said two states randomly; and a counter means (140) having an input for receiving threshold data which sets the terminal count of said counter and having a clock input for continuously receiving a plurality of clock pulses and having an enable input coupled to said random sequencer means and having a carry output, for counting said clock pulses when said two state signal is in a predetermined one of said two states, and for generating a carry signal at said carry output when said terminal count is reached.

15. Apparatus for processing a plurality of sequential frames of input video signals comprising:

video concentrator means (10) having a plurality of video inputs and a plurality of corresponding key signal inputs, for receiving a plurality of video input signals defining a plurality of current frames of video, and for receiving a plurality of corresponding input key signals indicating the level adjustments to be made by said video concentrator means of the corresponding video input signal, and having a combined video signal input for receiving a combined video signal defining a current frame of a plurality of sequential frames of said combined video signal, and having a combined video key signal input for receiving a combined video key signal corresponding to said combined video signal indicating the level of said combined video signal, and having a first video output and a corresponding key signal output and having a second video output and a corresponding second key signal output, for combining a selected combination of said input video signals after adjusting the levels thereof in accordance with the corresponding input key signals with said combined video signal to generate an output video signal at said first video output and for outputting at said key signal output a concentrator output key signal indicative of the level of said output video signal, and for combining a selected combination of said input video signals after level adjustment thereof in accordance with the corresponding input key signals with said combined video signal to generate a second output video signal at said second video output and for combining the key signals corresponding to the video signals combined to generate said second output signal to generate a second output key signal so as to have a level indicative of the level of said second output video signal and for outputting said second output key signal at said second key signal output; and

a recirculating framestore means (30), including a keystore means, having a video input coupled to said second video output and having a key input coupled to said second key signal output of said video concentrator means and having a video output coupled to said combined video signal input, and having a key signal output coupled to said combined video key signal input, for receiving said second video output signal and said second output key signal and for combining said second video output signal with a level adjusted recirculated video signal comprised of stored video signals from previous frames of said second video output signal from said video concentrator means, and for outputting the resultant combined video signals to said video concentrator means combined video signal input as said combined video signal, and for storing said combined video signals for a predetermined interval and then outputting said stored combined video signals as said recirculated video signals for combination with a new frame of said second video output signals from said video concentrator means, said framestore means further comprising means for receiving said second output key signal corresponding to said current frame of said second video output signal and for calculating a new recirculated key signal from said second output key signal and a recirculated key signal from the previous frame, and for receiving said recirculated video signal and for adjusting the level of said recirculated video signal in accordance with the value of said new recirculated key signal to generate said level adjusted recirculated video signal, and for storing said new recirculated key signal for a predetermined interval and then outputting the stored new recirculated key signal as said recirculated key signal.

16. Apparatus according to claim 15 further comprising means for selectively randomly altering said new recirculated key signal used to adjust the level of said recirculated video.

17. Apparatus according to claim 16 further comprising means for decreasing the values of said new recirculated key signal but not altering the level of said recirculated video signal until the level of said new recirculated key signal falls below a predetermined threshold, and then for decreasing the level of said recirculating video signal to zero.

18. A method of combining video signals, comprising:

combining a input video signal with a recirculated video signal to provide an output video signal, the recirculated video signal being obtained by storing the output signal for a predetermined interval; characterised in that the input video signal, the output video signal and the recirculated video signal are associated with an input key signal, an output key signal and a recirculated key signal respectively, the recirculated key signal is obtained by storing the output key signal for the said predetermined interval, the output key signal has a value determined in accordance with values of the input key signal and the recirculated key signal, and the recirculated video signal is adjusted in accordance with changes in the recirculated key signal.

19. A method according to claim 18 further comprising adjusting the output video signal in accordance with the output key signal.

20. A method according to claim 19 wherein the value of the recirculated key signal is adjusted in accordance with a selected steady gain control signal.

21. A method according to claim 19 wherein the value of the recirculated key signal is adjusted by means of random selection between a plurality of gain values.

22. A method according to any of claims 19 to 21 wherein the adjustment of the output video signal is delayed until the value of the recirculated key signal falls below a threshold.

**Revendications**

1. Appareil pour combiner de manière sélective des signaux vidéos pour produire un effet vidéo, comprenant :

un moyen de traitement (30, 72, 98, 114) réagissant à un signal vidéo d'entrée, à un signal de gradation d'entrée indiquant le niveau dudit signal vidéo d'entrée, à un signal vidéo recyclé et à un signal de gradation recyclé indiquant le niveau dudit signal vidéo recyclé, et disposé pour produire un signal de gradation de sortie ayant une valeur déterminée par les valeurs représentées par ledit signal de gradation d'entrée et ledit signal de gradation recyclé, produisant un signal de gradation de traitement de vidéo recyclée ayant une valeur déterminée par les valeurs représentées par ledit signal de gradation d'entrée et ledit signal de gradation recyclé, ajustant le niveau dudit signal vidéo recyclé en fonction de la valeur dudit signal de gradation de traitement de vidéo recyclée, et combinant ledit signal vidéo d'entrée avec ledit signal vidéo recyclé ajusté en niveau pour produire un signal vidéo de sortie incorporant ledit effet vidéo; et

un moyen de recyclage (86, 268) couplé audit moyen de traitement pour recevoir ledit signal vidéo de sortie et ledit signal de gradation de sortie, et agencé pour mémoriser à la fois ledit signal vidéo de sortie et ledit signal de gradation de sortie pendant un intervalle de temps prédéterminé et, ensuite pour sortir le signal vidéo de sortie mémorisé vers lesdits moyens de traitement en tant que signal vidéo recyclé et pour sortir ledit signal de gradation de sortie mémorisé en tant que signal de gradation recyclé.

2. Appareil selon la revendication 1 dans lequel ledit moyen de traitement produit ledit signal de gradation de sortie de manière à ce qu'il ait une valeur représentative du niveau dudit signal vidéo de sortie.

3. Appareil selon la revendication 2 comprenant de plus un moyen d'ajustement du gain de signal (120, 258) couplé audit moyen de traitement et réagissant à un signal de commande de gain pour modifier le signal de gradation de traitement vidéo recyclé en fonction de la valeur dudit signal de commande de gain.

4. Appareil selon la revendication 3 comprenant de plus un moyen (140, 146) pour modifier sélectivement de manière aléatoire la valeur dudit signal de commande de gain.

5. Appareil selon l'une quelconque des revendications précédentes comprenant de plus un moyen (132) couplé audit moyen de traitement pour recevoir ledit signal de gradation de traitement vidéo recyclé, pour réduire la valeur dudit signal vidéo recyclé à zéro lorsque la valeur dudit signal de gradation de traitement vidéo recyclé est au dessous d'un seuil sélectionné.

6. Appareil selon l'une quelconque des revendications précédentes comprenant de plus un moyen de combinaison de signal (10) comportant une pluralité de paires d'entrées de signaux vidéos et de gradation (14, 16) et une pluralité de paires de sorties de signaux vidéos et de gradation (38, 40), l'une desdites d'entrées de signaux vidéos et de gradation étant couplée pour recevoir ledit signal vidéo de sortie et ledit signal de gradation de sortie, respectivement, issus dudit moyen de processeur (30), et l'une desdites paires de sorties vidéos et de gradation étant connectées pour délivrer ledit signal de vidéo d'entrée et ledit signal de gradation d'entrée, respectivement, audit moyen de processeur, ledit moyen de combinaison de signal comportant une entrée (28) pour recevoir un signal de commande de combinaison déterminant les couplages des signaux vidéos d'entrée aux sorties vidéos, ledit moyen de combinaison de signal étant agencé pour combiner le signal vidéo issu de certaines sélectionnées desdites entrées vidéos déterminées par ledit signal de commande de combinaison en fonction des signaux de gradation correspondants reçus aux entrées de signal de gradation correspondantes desdites paires d'entrées, et pour sortir le signal vidéo combiné à une sortie sélectionnée, où chacune desdites sorties peut avoir comme signal vidéo de sortie une combinaison différente des signaux vidéos d'entrée sélectionnés, et pour sortir à chacune desdites sorties de signal de gradation un signal de gradation ayant une valeur indicative du niveau du signal de sortie vidéo combiné à la sortie vidéo correspondante.

7. Appareil pour produire un effet spécial vidéo en combinant un signal vidéo d'entrée avec un signal vidéo recyclé pour produire un signal vidéo de sortie, chacun desdits signaux vidéos ayant un gain identifié par la valeur des signaux de gradation respectifs qui indiquent les différences entre le gain du signal vidéo respectif et un gain de référence sélectionné, ledit appareil comprenant :

une entrée vidéo (70) pour recevoir un signal vidéo d'entrée;

une entrée de gradation (110) pour recevoir un signal de gradation d'entrée dans lequel ledit signal de gradation d'entrée comporte au moins une partie qui a une valeur plus petite que un mais plus grande que zéro;

un moyen de combinaison (72) comportant une première entrée (70) couplée pour recevoir ledit signal vidéo d'entrée et ayant une seconde entrée (74) pour recevoir ledit signal vidéo recyclé, pour combiner ledit signal vidéo d'entrée avec ledit signal vidéo recyclé pour produire ledit signal vidéo de sortie à une sortie (82);

un moyen de mémorisation (86) couplé à ladite sortie (82) et comportant une sortie de signal vidéo recyclé (96), pour mémoriser ledit signal vidéo de sortie pendant un intervalle de temps prédéterminé et puis pour sortir ledit signal vidéo de sortie mémorisé à ladite sortie de vidéo recyclé en tant que ledit signal vidéo recyclé;

un moyen de réglage de niveau (98) couplé entre ladite sortie de vidéo recyclée (96) et ladite seconde entrée (74), et comportant une entrée de signal de gradation (97) pour recevoir un signal de gradation de traitement de vidéo recyclée, pour ajuster le niveau dudit signal vidéo recyclé en fonction dudit signal de gradation de traitement de vidéo recyclée et pour coupler le signal vidéo recyclé ajusté en niveau à ladite seconde entrée;

un moyen de mémorisation de gradation (268) comportant une entrée et une sortie, pour recevoir un nouveau signal de gradation recyclé à ladite entrée, pour mémoriser ledit nouveau signal de gradation recyclé pendant un intervalle prédéterminé et puis pour sortir ledit nouveau signal de gradation recyclé à ladite sortie en tant que ledit signal de gradation recyclé;

un moyen de processeur de gradation (250, 254, 261) couplé à ladite entrée de gradation et couplé à ladite entrée dudit moyen de mémorisation de gradation et comportant une sortie de gradation recyclée couplée à ladite entrée de signal de gradation dudit moyen d'ajustement de niveau et comportant une entrée de signal de gradation recyclé (260) couplée à ladite sortie dudit moyen de mémorisation de gradation, pour recevoir ledit signal de gradation recyclé à partir dudit moyen de mémorisation de gradation, et pour calculer ledit signal de gradation de traitement de vidéo recyclée à partir dudit signal de gradation d'entrée et dudit signal de gradation recyclé et pour sortir ledit signal de gradation de traitement de vidéo recyclé à ladite sortie de gradation recyclée, et pour calculer ledit nouveau signal de gradation recyclé à partir dudit signal de gradation entré et dudit signal de gradation recyclé et pour sortir ledit nouveau signal de gradation recyclé à ladite entrée dudit moyen de mémorisation de gradation pour mémorisation.

8. Appareil selon la revendication 7, comprenant de plus un moyen (258) couplé entre ladite sortie dudit moyen de mémoire de gradation et ladite entrée de signal de gradation recyclé dudit moyen de processeur de gradation, et ayant une entrée pour recevoir un signal de commande de gain vidéo recyclé, pour ajuster le niveau dudit signal de gradation recyclé reçu à partir dudit moyen de mémoire de gradation en fonction dudit signal de commande de gain vidéo recyclé, et pour coupler à la fois le signal de gradation recyclé ajusté en niveau et le signal de gradation recyclé non ajusté en niveau audit moyen de processeur de gradation pour utilisation dans le calcul dudit nouveau signal de gradation recyclé et dudit signal de gradation de traitement vidéo recyclé.

9. Appareil selon la revendication 8 comprenant de plus un moyen (140, 146) pour modifier de manière aléatoire ledit signal de commande de gain vidéo de recyclage.

10. Appareil selon l'une quelconque des revendications 7 à 9 comprenant de plus un moyen (132) pour bloquer la modification du niveau dudit signal vidéo recyclé quelle que soit la modification dudit signal de traitement de gradation vidéo recyclé jusqu'à ce que ledit signal de gradation de traitement vidéo recyclé tombe en dessous d'un seuil, et, lorsque ledit signal de gradation de traitement vidéo recyclé tombe en dessous dudit seuil, pour réduire le niveau dudit signal vidéo recyclé à un niveau prédéterminé.

11. Appareil selon l'une quelconque des revendications 7 à 10 comprenant de plus un moyen pour modifier le niveau dudit signal vidéo recyclé en fonction de l'un choisi d'une pluralité de signaux de gradation de traitement vidéo recyclés calculés à partir d'une pluralité desdits signaux de commande de gain vidéo de recyclage, sélectionnés de manière aléatoire.

12. Appareil selon l'une quelconque des revendications 7 à 11, comprenant de plus un moyen couplé à ladite entrée vidéo et couplé à ladite entrée de gradation et comportant une entrée pour recevoir un signal de commande de gain entré pour ajuster simultanément les niveaux dudit signal vidéo d'entrée et dudit signal de gradation d'entrée en fonction du niveau dudit signal de commande de gain entré.

13. Appareil selon la revendication 8 comprenant de plus un moyen (140, 146) couplé audit moyen d'ajustement de niveau et audit moyen de processeur de gradation pour modifier de manière aléatoire le niveau dudit signal vidéo recyclé en modifiant simultanément de manière aléatoire la valeur dudit signal de gradation de traitement vidéo recyclé.

**14.** Appareil selon la revendication 9 dans lequel ledit moyen pour modifier de manière aléatoire ledit signal de commande de gain vidéo de recyclage comprend : un moyen de séquenceur aléatoire (146) pour produire un signal à deux états qui prend continuellement l'un desdits deux états de manière aléatoire; et un moyen de compteur (140) ayant une entrée pour recevoir une information de seuil qui détermine le décompte final dudit compteur et comportant une entrée d'horloge pour recevoir continuellement une pluralité d'impulsions d'horloge et ayant une entrée d'activation couplée audit moyen de séquenceur aléatoire et ayant une sortie de report, pour compter lesdites impulsions d'horloge lorsque ledit signal à deux états est dans l'un prédéterminé desdits deux états, et pour produire un signal de report à ladite sortie de report lorsque ledit décompte final est atteint.

**15.** Appareil pour traiter une pluralité d'images séquentielles de signaux vidéos entrés comprenant :

un moyen de concentrateur vidéo (10) ayant une pluralité d'entrées vidéos et une pluralité d'entrées de signal de gradation correspondantes, pour recevoir une pluralité de signaux d'entrée vidéos définissant une pluralité d'images courantes de vidéo, et pour recevoir une pluralité de signaux de gradation d'entrée correspondants indiquant les ajustements de niveaux devant être effectués par ledit moyen de concentrateur vidéo du signal d'entrée vidéo correspondant, et ayant une entrée de signal vidéo combiné pour recevoir un signal vidéo combiné définissant une image courante d'une pluralité d'images séquentielles dudit signal vidéo combiné, et ayant une entrée de signal de gradation vidéo combiné pour recevoir un signal de gradation vidéo combiné correspondant audit signal vidéo combiné indiquant le niveau dudit signal vidéo combiné, et ayant une première sortie vidéo et une sortie de signal de gradation correspondante et ayant une seconde sortie vidéo et une seconde sortie de signal de gradation correspondante, pour réaliser une combinaison sélectionnée desdits signaux vidéos d'entrée après ajustement de leurs niveaux en fonction des signaux de gradation d'entrée correspondant avec ledit signal vidéo combiné pour produire un signal vidéo de sortie à ladite première sortie vidéo et pour sortir à ladite sortie de signal de gradation un signal de gradation de sortie de concentrateur indicatif du niveau dudit signal vidéo de sortie, et pour réaliser une combinaison sélectionnée desdits signaux vidéos d'entrée après leurs ajustements de niveaux en fonction des signaux de gradation d'entrée correspondant avec ledit signal vidéo combiné pour produire un second signal vidéo de sortie à ladite seconde sortie vidéo et pour combiner les signaux de gradation correspondant aux signaux vidéos combinés pour produire ledit second signal de sortie pour produire un second signal de gradation de sortie de manière à avoir une indication de niveau du niveau dudit second signal vidéo de sortie et pour sortir ledit second signal de gradation de sortie à ladite seconde sortie de signal de gradation; et

un moyen de mémorisation de recyclage (30), comprenant un moyen de mémorisation de gradation, ayant une entrée vidéo couplée à ladite seconde sortie vidéo et ayant une entrée de gradation couplée à ladite seconde sortie de signal de gradation dudit moyen de concentration vidéo et ayant une sorite vidéo couplée à ladite entrée de signal vidéo combiné, et ayant une sortie de signal de gradation couplée à ladite entrée de signal de gradation vidéo combiné, pour recevoir ledit second signal vidéo de sortie et ledit second signal de gradation de sortie et pour combiner ledit second signal vidéo de sortie avec un signal vidéo recyclé ajusté en niveau constitué des signaux vidéos mémorisés des images précédentes dudit second signal de sortie vidéo à partir dudit moyen de concentrateur vidéo, et pour sortir les signaux vidéos combinés résultant vers ladite entrée de signal vidéo combiné dudit moyen de concentrateur vidéo en tant que ledit signal vidéo combiné, et pour mémoriser lesdits signaux vidéos combinés pendant un intervalle de temps prédéterminé et ensuite pour sortir lesdits signaux vidéos combinés mémorisés en tant que lesdits signaux vidéos recyclés pour combinaison avec une nouvelle image desdits seconds signaux de sortie vidéos issus dudit moyen de concentrateur vidéo, ledit moyen de mémorisation d'image comprenant de plus un moyen pour recevoir ledit second signal de gradation de sortie correspondant à ladite image courante dudit second signal vidéo de sortie et pour calculer un nouveau signal de gradation recyclé à partir dudit second signal de gradation de sortie et un signal de gradation recyclé à partir de l'image précédente, et pour recevoir ledit signal vidéo recyclé et pour ajuster le niveau dudit signal vidéo recyclé en fonction de la valeur dudit nouveau signal de gradation recyclé pour produire ledit signal vidéo recyclé ajusté en niveau, et pour mémoriser ledit nouveau signal de gradation recyclé pendant un intervalle de temps prédéterminé et ensuite pour sortir le nouveau signal de gradation recyclé en tant que ledit signal de gradation recyclé.

16. Appareil selon la revendication 15 comprenant de plus un moyen pour modifier sélectivement de manière aléatoire ledit nouveau signal de gradation recyclé utilisé pour ajuster le niveau de ladite vidéo recyclée.

17. Appareil selon la revendication 16 comprenant de plus un moyen pour diminuer les valeurs dudit nouveau signal de gradation recyclé mais ne pas diminuer le niveau dudit signal vidéo recyclé jusqu'à ce que le niveau dudit nouveau signal de gradation recyclé tombe en dessous d'un seuil prédéterminé, et alors pour diminuer le niveau dudit signal vidéo de recyclage jusqu'à zéro.

18. Un procédé pour combiner des signaux vidéos comprenant :

la combinaison d'un signal vidéo d'entrée avec un signal vidéo recyclé pour produire un signal vidéo de sortie, le signal vidéo recyclé étant obtenu par la mémorisation du signal de sortie pendant un intervalle de temps prédéterminé; caractérisé en ce que le signal vidéo d'entrée, le signal vidéo de sortie et le signal vidéo recyclé sont associés avec respectivement un signal de gradation d'entrée, un signal de gradation de sortie et un signal de gradation recyclé, le signal de gradation recyclé est obtenu par la mémorisation du signal de gradation de sortie pendant un intervalle de temps prédéterminé, le signal de gradation de sortie a une valeur déterminée en fonction des valeurs du signal de gradation d'entrée et du signal de gradation recyclé, et le signal vidéo recyclé est ajusté en fonction des variations dans le signal de gradation recyclé.

19. Un procédé selon la revendication 18 comprenant de plus l'ajustement du signal vidéo de sortie en fonction du signal de gradation de sortie.

20. Un procédé selon la revendication 19 dans lequel la valeur du signal de gradation recyclé est ajustée en fonction d'un signal de commande de gain uniforme choisi.

21. Un procédé selon la revendication 19 dans lequel la valeur du signal de gradation recyclé est ajustée au moyen d'un choix aléatoire entre une pluralité de valeurs de gain.

22. Un procédé selon l'une quelconque des revendications 19 à 21 dans lequel l'ajustement du signal vidéo de sortie est retardé jusqu'à ce que la valeur du signal de gradation recyclé tombe au dessous d'un seuil.

**Patentansprüche**

1. Einrichtung zur selektiven Kombination von Videosignalen zwecks Erzeugung eines Videoeffektes mit:

einer Prozessoranordnung (30, 72, 98, 114), die von einem Eingangsvideosignal, einem den Pegel des Eingangsvideosignals anzeigenden Kennsignal, einem rückgeführten Videosignal und einem den Pegel des rückgeführten Videosignals anzeigenden rückgeführten Kennsignal angesteuert ist, zur Erzeugung eines Ausgangskennsignals dient, das einen durch die Werte des Eingangskennsignals und des rückgeführten Kennsignals festgelegten Wert besitzt, ein rückgeführtes Videoprozessor-Kennsignal mit einem durch die Werte des Eingangskennsignals und des rückgeführten Kennsignals festgelegten Wert erzeugt, den Pegel des rückgeführten Kennsignals als Funktion des Wertes des rückgeführten Videoprozessor-Kennsignals einstellt und das Eingangsvideosignal mit dem im Pegel eingestellten rückgeführten Videosignal zwecks Erzeugung eines den Videoeffekt aufweisenden Ausgangsvideosignals kombiniert, und

einer an die Prozessoranordnung angekoppelten Rückführungsanordnung (86, 268) zur Aufnahme des Ausgangsvideosignals und des Ausgangskennsignals zwecks deren Speicherung für ein vorgegebenes Intervall und Ausgabe des gespeicherten Ausgangsvideosignals an die Prozessoranordnung als rückgeführtes Videosignal sowie zur Ausgabe des gespeicherten Ausgangskennsignals als rückgeführtes Kennsignal.

2. Einrichtung nach Anspruch 1, bei der die Prozessoranordnung das Ausgangskennsignal mit einem Wert erzeugt, der den Pegel des Ausgangsvideosignals repräsentiert.

3. Einrichtung nach Anspruch 2, mit einer an die Prozessoranordnung angekoppelten und von einem Verstärkungsregelsignal angesteuerten Signal-Verstärkungseinstellanordnung (120, 258) zur Änderung des rückgeführten Videoprozessor-Kennsignals als Funktion des Wertes des Verstärkungsregelsignals.

4.  Einrichtung nach Anspruch 3, mit einer Anordnung (140, 146) zur selektiven wahlfreien Änderung des Wertes des Verstärkungsregelsignals.

5.  Einrichtung nach den vorhergehenden Ansprüchen mit einer an die Prozessor angekoppelten Anordnung (132) zur Aufnahme des rückgeführten Videoprozessor-Kennsignals zwecks Reduzierung des Wertes des rückgeführten Videosignals auf Null, wenn der Wert des rückgeführten Videoprozessor-Kennsignals kleiner als ein ausgewählter Schwellwert ist.

6.  Einrichtung nach den vorhergehenden Ansprüchen mit einer Signalkombinationsanordnung (10), die eine Vielzahl von Video- und Kennsignal-Eingangspaaren (14, 16) sowie eine Vielzahl von Video- und Kennsignal-Ausgangspaaren (38, 40) aufweist, wobei eines der Video- und Kennsignal-Eingangspaare das Ausgangsvideosignal bzw. das Ausgangskennsignal von der Prozessoranordnung (30) aufnimmt und eines der Video- und Kennsignal-Ausgangspaare das Eingangsvideosignal bzw. das Eingangskennsignal in die Prozessoranordnung einspeist, ein Eingang (28) zur Aufnahme eines Kombinationssteuersignals vorgesehen ist, das die Kopplung von Eingangsvideosignalen auf Videoausgänge festlegt, eine Kombination des Videosignals von ausgewählten Videoeingängen vorgenommen wird, welche durch das Kombinationssteuersignal als Funktion der entsprechenden an den entsprechenden Kennsignaleingängen der Eingangspaare aufgenommenen Kennsignale festgelegt werden, das kombinierte Signal an einem ausgewählten Ausgang ausgegeben wird und jeder Ausgang als Ausgangsvideosignal eine unterschiedliche Kombination von ausgewählten Eingangsvideosignalen führen kann und wobei an jedem Kennsignalausgang ein Kennsignal ausgegeben wird, dessen Wert ein Maß für den Pegel des kombinierten Videoausgangssignals am entsprechenden Videoausgang ist.

7.  Einrichtung zur Realisierung eines Videospezialeffektes durch Kombination eines Eingangsvideosignals mit einem rückgeführten Videosignal zwecks Erzeugung eines Ausgangsvideosignals, wobei die Videosignale eine Verstärkung besitzen, die durch den Wert entsprechender Kennsignale identifiziert sind, welche ihrerseits ein Maß für Unterschiede zwischen der Verstärkung des entsprechenden Videosignals und einer ausgewählten Referenzverstärkung sind, mit

einem Videoeingang (70) zur Aufnahme eines Eingangsvideosignals,

einem Kennungseingang (110) zur Aufnahme eines Eingangskennsignals, von dem wenigstens ein Teil einen Wert besitzt, der kleiner als Eins jedoch größer als Null ist,

einer Kombinationsanordnung (72) mit einem ersten das Eingangsvideosignal aufnehmenden Eingang (70) und einem zweiten, das rückgeführte Videosignal aufnehmenden Eingang (74) zur Kombination des Eingangsvideosignals mit dem rückgeführten Videosignal zwecks Erzeugung des Ausgangsvideosignals an einem Ausgang (82),

einer an den Ausgang (82) angekoppelten und einen Ausgang (96) für das rückgeführte Videosignal aufweisenden Speicheranordnung (86) zur Speicherung des Ausgangsvideosignals für ein vorgegebenes Intervall und nachfolgender Ausgabe des gespeicherten Ausgangsvideosignals am Ausgang für das rückgeführte Videosignal als rückgeführtes Videosignal,

einer zwischen den Ausgang (96) für das rückgeführte Videosignal und den zweiten Eingang (74) gekoppelten Pegeleinstellanordnung (98) mit einem Kennsignaleingang (97) zur Aufnahme eines rückgeführten Videoprozessor-Kennsignals zwecks Einstellung des Pegels des rückgeführten Videosignals als Funktion des rückgeführten Videoprozessor-Kennsignals sowie zur Ankopplung des im Pegel eingestellten rückgeführten Videosignals an den zweiten Eingang,

einer Kennungsspeicheranordnung (268) mit einem Eingang und einem Ausgang zur Aufnahme eines neuen rückgeführten Kennsignals am Eingang zwecks Speicherung des neuen rückgeführten Kennsignals für ein vorgegebenes Intervall und nachfolgender Ausgabe des neuen rückgeführten Kennsignals am Ausgang als rückgeführtes Kennsignal,

und einer an den Kennungseingang und den Eingang der Kennungsspeicheranordnung angekoppelten Kennprozessoranordnung (250, 254, 261) mit einem an den Kennsignaleingang der Pegeleinstellanordnung angekoppelten Ausgang für das rückgeführte Kennsignal sowie einem an den Ausgang der Kennungsspeicheranordnung angekoppelten Eingang (260) für das rückgeführte Kennsignal für die Aufnahme des rückgeführten Kennsignals von der Kennungsspeicheranordnung, zur Berechnung des rückgeführten Videoprozessor-Kennsignals aus dem Eingangskennsignal und dem rückgeführten Kennsignal sowie zur Ausgabe des rückgeführten Videoprozessor-Kennsignals am Ausgang für das rückgeführte Kennsignal sowie zur Berechnung des neuen rückgeführten Kennsignals aus dem Eingangskennsignal und dem rückgeführten Kennsignal sowie zur Ausgabe des neuen rückgeführten Kennsignals zum Eingang der Kennungsspeicheranordnung zwecks Speicherung.

8. Einrichtung nach Anspruch 7, mit einer zwischen den Ausgang der Kennungsspeicheranordnung und den Eingang für das rückgeführte Kennsignal· der Kennungsprozessoranordnung gekoppelten und einen Eingang zur Aufnahme eines rückgeführten Video-Verstärkungsregelsignals aufweisenden Anordnung (258) zur Einstellung des Pegels des von der Kennungsspeicheranordnung aufgenommenen rückgeführten Kennsignals als Funktion des rückgeführten Video-Verstärkungsregelsignals sowie zur Ankopplung sowohl des im Pegel eingestellten rückgeführten Kennsignals und des nicht im Pegel eingestellten rückgeführten Kennsignals an die Kennungsprozessoranordnung für die Verwendung bei der Berechnung des neuen rückgeführten Kennsignals und des rückgeführten Videoprozessor-Kennsignals.

9. Einrichtung nach Anspruch 8, mit einer Anordnung (140, 146) zur wahlfreien Änderung des Rückführungs-Video-Verstärkungsregelsignals.

10. Einrichtung nach den Ansprüchen 7 bis 9 mit einer Anordnung (132) zur Blockierung der Änderung des Pegels des rückgeführten Videosignals unabhängig von Änderungen des rückgeführten Videoprozessor-Kennsignals bis zu dessen Abfall unter einen Schwellwert sowie zur Reduzierung des Pegels des rückgeführten Videosignals auf einen vorgegebenen Pegel bei Abfall des rückgeführten Videoprozessor-Kennsignals unter den Schwellwert.

11. Einrichtung nach den Ansprüchen 7 bis 10 mit einer Anordnung zur Änderung des Pegels des rückgeführten Videosignals als Funktion eines ausgewählten Signals aus einer Vielzahl von rückgeführten Videoprozessor-Kennsignalen, das aus einer wahlfrei ausgewählten Vielzahl der Rückführungs-Video-Verstärkungsregelsignale berechnet ist.

12. Einrichtung nach den Ansprüchen 7 bis 11, mit einer an den Videoeingang und den Kennungseingang angekoppelten sowie einen Eingang zur Aufnahme eines Eingangs-Verstärkungsregelsignals aufweisenden Anordnung zur gleichzeitigen Einstellung der Pegel des Eingangsvideosignals und des Eingangskennsignals als Funktion des Pegels des Eingangs-Verstärkungsregelsignals.

13. Einrichtung nach Anspruch 8 mit einer an die Pegeleinstellanordnung und die Kennungsprozessoranordnung angekoppelten Anordnung (140, 146) zur wahlfreien Änderung des Pegels des rückgeführten Videosignals durch gleichzeitige wahlfreie Änderung des Wertes des rückgeführten Videoprozessor-Kennsignals.

14. Einrichtung nach Anspruch 9, bei der die Anordnung zur wahlfreien Änderung des Rückführungs-Video-Verstärkungsregelsignals folgende Komponenten umfaßt:

eine Direktsortiereranordnung (146) zur Erzeugung eines Signals mit zwei Zuständen, das kontinuierlich wahlfrei einen der beiden Zustände annimmt, sowie eine Zähleranordnung (41) mit einem Eingang zur Aufnahme von Schwellwertdaten, welche die Ausgangszählung des Zählers setzen, und mit einem Takteingang zur kontinuierlichen Aufnahme einer Vielzahl von Taktimpulsen sowie einem an die Direktsortieranordnung angekoppelten Freigabeeingang und einem Übertragsausgang zur Zählung der Taktimpulse, wenn sich das Signal mit den zwei Zuständen in einem vorgegebenen Zustand der beiden Zustände befindet, sowie zur Erzeugung eines Übertragssignals am Übertragsausgang, wenn die Ausgangszählung erreicht ist.

15. Einrichtung zur Verarbeitung einer Vielzahl von sequentiellen Bildern von Eingangsvideosignalen mit:

einer Videosammelanordnung (10) mit einer Vielzahl von Videoeingängen und einer Vielzahl von entsprechenden Kennsignaleingängen zur Aufnahme einer Vielzahl von eine Vielzahl von laufenden Videobildern definierenden Videoeingangssignalen sowie zur Aufnahme einer Vielzahl von entsprechenden Eingangskennsignalen, welche die durch die Videosammelanordnung durchzuführenden Pegeleinstellungen des entsprechenden Videosignals anzeigen, mit einem kombinierten Videosignaleingang zur Aufnahme eines kombinierten Videosignals, das ein laufendes Bild einer Vielzahl von sequentiellen Bildern des kombinierten Videosignals definiert, einem kombinierten Videokennsignal-Eingang zur Aufnahme eines den Pegel des kombinierten Videosignals anzeigenden kombinierten Videokennsignals entsprechend dem kombinierten Videosignal, einem ersten Videoausgang und einem entsprechenden Kennsignalausgang sowie einem zweiten Videoausgang und einem entsprechenden zweiten Kennsignalausgang zur Kombination einer ausgewählten Kombination der Videoeingangssignale nach Einstellung von deren Pegel als Funktion der entsprechenden Eingangskennsignale mit dem kombinierten Videosignal zwecks Erzeugung eines Ausgangsvideosignals am ersten Videoausgang, zur Ausgabe eines ein Maß für den Pegel des Ausgangsvideosignals darstellenden Sammel-Ausgangkennsignals am Kennsignalausgang, zur Kombination einer ausgewählten Kombination der Eingangsvideosignale nach deren Pegeleinstellung als Funktion der entsprechenden Eingangskennsignale mit dem kombinierten Videosignal zwecks Erzeugung eines zweiten Ausgangsvideosignals am zweiten Videoausgang sowie zur Kombination der den kombinierten Videosignalen entsprechenden Kennsignale zwecks Erzeugung des zweiten Ausgangssignals für die Erzeugung eines zweiten Ausgangskennsignals für einen ein Maß für den Pegel des zweiten Ausgangvideosignal darstellenden Pegels und Ausgabe des zweiten Ausgangskennsignals am zweiten Kennsignalausgang, und

einer eine Kennungsspeicheranordnung enthaltenden Rückführungs-Bildspeicheranordnung (30) mit einem an den zweiten Videoausgang der Videosammelanordnung angekoppelten Videoeingang, einem an den zweiten Kennsignalausgang der Videosammelanordnung angekoppelten Kennungseingang, einem an den kombinierten Videosignaleingang angekoppelten Videoausgang sowie einem an den kombinierten Videokennsignal-Eingang angekoppelten Kennsignalausgang zur Aufnahme des zweiten Videoausgangssignals und des zwei-ten Ausgangskennsignals und Kombination des zweiten Videoausgangssignals mit einem im Pegel eingestellten rückgeführten Videosignal aus gespeicherten Videosignalen vorhergehender Bilder des zweiten Videoausgangssignals von der Videosammelanordnung, zur Ausgabe der resultierenden kombinierten Videosignale an den kombinierten Videosignaleingang der Videosammelanordnung als kombiniertes Videosignal sowie zur Speicherung der kombinierten Videosignale für ein vorgegebenes Intervall und nachfolgenden Ausgabe der gespeicherten kombinierten Videosignale als rückgeführte Videosignale für die Kombination mit einem neuen Bild der zweiten Videoausgangssignale von der Videosammelanordnung, wobei die Bildspeicheranordnung Mittel zur Aufnahme des zweiten Ausgangskennsignals entsprechend dem laufenden Bild des zweiten Videoausgangssignals und Berechnung eines neuen rückgeführten Kennsignals aus dem zweiten Ausgangsvideosignal und einem rückgeführten Kennsignal vom vorhergehenden Bild, zur Aufnahme des rückgeführten Videosignals und Einstellung des Pegels des rückgeführten Videosignals als Funktion des Wertes des neuen rückgeführten Kennsignals zwecks Erzeugung des im Pegel eingestellten rückgeführten Videosignals sowie zur Speicherung des neuen rückgeführten Kennsignals für ein vorgegebenes Intervall und nachfolgenden Ausgabe des gespeicherten neuen rückgeführten Kennsignals als rückgeführtes Kennsignal umfaßt.

16. Einrichtung nach Anspruch 15 mit einer Anordnung zur selektiven wahlfreien Änderung des zur Einstellung des Pegels des rückgeführten Videosignals verwendeten neuen rückgeführten Kennsignals.

17. Einrichtung nach Anspruch 16 mit einer Anordnung zur Verringerung der Werte des neuen rückgeführten Kennsignals ohne Änderung des Pegels des rückgeführten Videosignals bis zum Abfallen des Pegels des neuen rückgeführten Kennsignals unter einen vorgegebenen Schwellwert und nachfolgender Verringerung des Pegels des rückgeführten Videosignals auf Null.

18. Verfahren zur Kombination von Videosignalen, bei dem ein Eingangsvideosignal mit einem rückgeführten Videosignal zur Erzeugung eines Ausgangsvideosignals kombiniert und das rückgeführte Videosignal durch Speicherung des Ausgangssignals für ein vorgegebenes Intervall gewonnen wird, **dadurch gekennzeichnet**, daß das Eingangsvideosignal, das Ausgangsvideosignal und das rückgeführte Videosignal einem Eingangskennsignal, einem Ausgangskennsignal bzw. einem rückgeführten Kennsignal zugeordnet sind, daß das rückgeführte Kennsignal durch Speicherung des Ausgangskennsignals für ein vorgegebenes Intervall gewonnen wird, daß das Ausgangskennsignal einen als Funktion der Werte des Eingangskennsignals und des rückgeführten Kennsignals festgelegten Wert besitzt und daß das rückgeführte Videosignal als Funktion von Änderungen des rückgeführten Kennsignals eingestellt wird.

19. Verfahren nach Anspruch 18, bei dem das Ausgangsvideosignal als Funktion des Ausgangskennsignals eingestellt wird.

20. Verfahren nach Anspruch 19, bei dem der Wert des rückgeführten Kennsignals als Funktion eines ausgewählten stetigen Verstärkungsregelsignals eingestellt wird.

21. Verfahren nach Anspruch 19, bei dem der Wert des rückgeführten Kennsignals mittels einer wahlfreien Auswahl aus einer Vielzahl von Verstärkungswerten eingestellt wird.

22. Verfahren nach den Ansprüchen 19 bis 21, bei dem die Einstellung des Ausgangsvideosignals verzögert wird, bis der Wert des rückgeführten Kennsignals unter einen Schwellwert fällt.

FIG_1

FIG_2

## KEY PROCESSOR (CHANNEL A)

$K_{IN}$

$110$

$1 - K_{IN}$ — $250$

$254$ — $252$

$261$ — $+$ — $127$

$114$

MINIMUM PROCESSOR — $254$

$K_{MIN}$

$262$

$264$

$\dfrac{K_{MIN}}{K_{RECIRC}}$

$128$

$260$ — $K_{RECIRC}$

RECIRC. GAIN — $258$

$118$ — $\times$ — $256$

KEY STORE — $268$

## FIG_3

$190$

$214$
$212$
$210$

$204$
$202$
$200$

## FIG_4

THRESHOLD

$142$

$8$ — $140$

$146$

RANDOM SEQUENCER (0 OR 1)

PRESET COUNTER ENABLE BORROW — RANDOM

$144$ CLOCK

$136$

$150$

## FIG_5